# EUROPÄISCHE PATENTSCHRIFT

(11) **EP 3 022 998 B1**
(45) Veröffentlichungstag und Bekanntmachung des Hinweises auf die Patenterteilung: **31.05.2017**
(21) Anmeldenummer: 15003159.9
(22) Anmeldetag: 19.03.2011
(51) Int. Cl.: A01D 34/90, A01G 3/06, B25F 5/00, B25F 5/02, A01D 34/416, H02K 9/04, H02K 21/22

(54) **HANDGEFÜHRTES ARBEITSGERÄT**
MANUALLY OPERATED WORK DEVICE
APPAREIL DE TRAVAIL PORTATIF

(30) Priorität: 31.03.2010 DE 102010013756
(43) Veröffentlichungstag der Anmeldung: 25.05.2016
(62) Teilanmeldung aus: 11002275.3
(73) Patentinhaber: Andreas Stihl AG & Co. KG, 71336 Waiblingen (DE)
(72) Erfinder: MÜLLER, Matthias, 73630 Remshalden (DE); ROSSKAMP, Heiko Dr., 73099 Adelberg (DE); LIEBHARD, Gernot, 71332 Waiblingen (DE); RENZ, Michael, 70374 Stuttgart (DE)
(74) Vertreter: Reinhardt, Annette

(56) Entgegenhaltungen:
- DE-A1-102004 032 789
- GB-A- 1 578 906
- JP-A- H0 662 637
- US-A- 3 034 376
- US-A- 4 352 243
- US-A- 4 726 112

## Beschreibung

Die Erfindung betrifft ein handgeführtes Arbeitsgerät mit einem Werkzeug, das von einem Motor angetrieben ist, mit einem Akku zum Antrieb des Werkzeugs und mit einem Führungsrohr.

Es ist bekannt, bei derartigen handgeführten Arbeitsgeräten, beispielsweise Freischneidern, Hochentastern oder dgl., einen Akkumulator zur Energieversorgung des Elektromotors einzusetzen. Bei bekannten Arbeitsgeräten werden einfache, mechanisch kommutierte Bürstenmotoren eingesetzt. Ein derartiges Arbeitsgerät ist beispielsweise aus der JP 06-062637 A bekannt.

Aus der US 2008/042500 A1 geht ein Elektromotor hervor, bei dem die Vibrationen, die bei der Rotation des Rotors erzeugt werden, gedämpft werden sollen. Hierzu ist zwischen dem Lagersitz und dem Lager der Motorwelle jeweils ein Dämpfungselement angeordnet.

Aus der DE 10 2004 032789 A1 ist ein Akku-Schlagschrauber bekannt, bei dem der Motor und das Getriebe gegenüber dem Gehäuse über Dämpfer abgestützt sind. Dadurch sollen die im Betrieb erzeugten Torsionsschwingungen getilgt werden.

Der Erfindung liegt die Aufgabe zugrunde, ein handgeführtes Arbeitsgerät zu schaffen, das einen robusten Aufbau besitzt.

Diese Aufgabe wird durch ein handgeführtes Arbeitsgerät mit den Merkmalen des Anspruchs 1 gelöst.

Bei bekannten Innenläufermotoren wird die Motorwelle im Bereich ihrer Enden gelagert. Bei einem Außenläufermotor ist dies aufgrund der Anordnung des Werkzeugs an einem Ende der Motorwelle nicht möglich. Dadurch, dass die Motorwelle nur an ihrem oberen Ende und im mittleren Bereich gelagert werden kann, können sich im Betrieb sehr hohe Biegemomente an der Motorwelle ergeben.

Um im Betrieb eine übermäßige Belastung der Motorwelle durch Biegemomente zu verhindern, ist vorgesehen, dass der Motor insgesamt elastisch gelagert ist, so dass er bei auftretenden Querbelastungen ausweichen und kippen kann und nicht das gesamte Biegemoment in die Motorwelle eingeleitet wird. Dies kann auf einfache Weise dadurch erreicht werden, dass der Befestigungsflansch des Motors zwischen Gehäuserippen des Motorgehäuses eingeschoben und so im Motorgehäuse gehalten ist. Die Gehäuserippen bestehen insbesondere aus Kunststoff und weisen dadurch eine ausreichende Eigenelastizität auf. Der Kunststoff ist dabei vorteilhaft ein im Wesentlichen formstabiler Kunststoff und kein Elastomer. Dadurch kann eine ausreichende Festigkeit im Betrieb erreicht werden. Alternativ kann auch vorgesehen sein, dass sich der Motor über ein separates Bauteil mit definierter Eigenelastizität, beispielsweise ein metallisches Blech, im Motorgehäuse abstützt. Um eine übermäßige Bewegung der Motorwelle zu verhindern, ist vorgesehen, dass das Abtriebsteil sich bei Belastungen quer zur Längsrichtung der Motorwelle an einem Gehäuserand des Motorgehäuses abstützt. Der Gehäuserand begrenzt dabei insbesondere einen zwischen rotierendem Abtriebsteil und Motorgehäuse gebildeten Luftaustrittsspalt für die Kühlluft. Eine hohe Stabilität ergibt sich, wenn das Motorgehäuse aus Kunststoff, insbesondere aus ABS (AcrylnitrilButadien-Styrol) ist. Dabei kann auch vorgesehen sein, dass der Anschlag zwischen dem Gehäuserand und den Leitschaufeln am Luftaustrittsspalt gebildet ist.

Im Betrieb muss verhindert werden, dass Verschmutzungen in das Motorgehäuse eintreten. Gleichzeitig muss ein Austritt für die in das Motorgehäuse angesaugte Kühlluft bereitgestellt werden. Hierzu ist vorgesehen, dass zwischen dem Abtriebsteil und dem Motorgehäuse ein ringförmiger Luftaustrittsspalt gebildet ist, durch den die Kühlluft austritt, und dass mindestens eine Leitschaufel vorgesehen ist, die in den Ringspalt ragt. Die Leitschaufel verringert dadurch den freien Querschnitt des Luftaustrittsspalts. Vorteilhaft ist die Leitschaufel an dem Abtriebsteil angeordnet. Aufgrund der Rotation des Abtriebsteils können zwischen benachbarten Leitschaufeln am Umfang ausreichend große freie Abschnitte gebildet werden, durch die die Luft austreten kann. Aufgrund der Rotation ist das Eintreten von Fremdmaterial in das Motorgehäuse durch den Abschnitt zwischen benachbarten Leitschaufeln nicht oder nur sehr schwer möglich, so dass das Motorgehäuse im Wesentlichen frei von Verschmutzungen gehalten werden kann. Die durch den Luftaustrittsspalt ausgeblasene Kühlluft bläst Schmutzpartikel vom Luftaustrittsspalt weg und verhindert dadurch den Eintritt der Schmutzpartikel ins Motorgehäuse.

Vorteilhaft sind mehrere Leitschaufeln vorgesehen. Die Leitschaufeln sind dabei insbesondere etwa radial ausgerichtet. Eine vorteilhafte Gestaltung ergibt sich, wenn der Luftaustrittsspalt an einem im Querschnitt etwa U-förmigen Ringkanal des Abtriebsteils ausgebildet ist, in den ein Gehäuserand des Motorgehäuses ragt. Zwischen dem Gehäuserand und dem Ringkanal ist dadurch eine labyrinthförmige Luftführung mit mehreren Umlenkungen gebildet, die das Eindringen von Verschmutzungen in das Motorgehäuse weiter erschwert. Die Leitschaufel ist insbesondere in dem Ringkanal angeordnet. Der Gehäuserand ragt dabei bis nahe an die Leitschaufel. Der Abstand zwischen Gehäuserand und Leitschaufel ist vorteilhaft so gewählt, dass eine Berührung zwischen Gehäuserand und Leitschaufel im üblichen Betrieb verhindert ist. Der Abstand zwischen Gehäuserand und Leitschaufel ist vorteilhaft unter Berücksichtigung von Fertigungstoleranzen so klein wie möglich gewählt. Der Abstand beträgt insbesondere von etwa 0,5 mm bis etwa 2 mm.

Der Gehäuserand kann sich dabei in axialer Richtung der Motorwelle in den Ringkanal erstrecken. Es kann jedoch auch vorgesehen sein, dass der Ringkanal sich in Umfangsrichtung außerhalb oder innerhalb des Gehäuserands befindet, und dass der Gehäuserand radial zur Längsachse der Motorwelle nach außen oder nach innen ragt. Es kann auch vorgesehen sein, dass der Gehäuserand auch in seitlicher Richtung zur Leitschaufel zu dem Ringkanal nur einen sehr geringen Abstand, beispielsweise einen Abstand von etwa 0,5 mm bis etwa 2 mm, besitzt. Dadurch wird eine noch bessere Abdichtung gegen Verschmutzungen erreicht.

Vorteilhaft besitzt das Arbeitsgerät einen Schneidkopf, der ein rotierendes Werkzeug, beispielsweise ein Messer oder einen Mähfaden, trägt, wobei der Ringkanal an einer drehfest mit dem Schneidkopf verbundenen Scheibe ausgebildet ist. Dadurch ergibt sich eine einfache Gestaltung. Die Scheibe besteht vorteilhaft aus Kunststoff, insbesondere aus glasfaserverstärktem Polyamid. Das Material der Scheibe und des Motorgehäuses sind vorteilhaft so aufeinander abgestimmt, dass bei einer Berührung von Gehäuserand und Motorgehäuse kein Verschweißen der beiden Bauteile miteinander stattfinden kann.

Durch den Einsatz eines elektronisch kommutierten, bürstenlosen Motors wird der Wartungsaufwand für den Motor verringert, da keine verschleißbehafteten Bürsten benötigt werden. Ein derartiger elektronisch kommutierter Motor wird mit einem mindestens 3-phasigen Drehfeld betrieben. Zur Erzeugung des mindestens 3-phasigen Drehfelds aus dem vom Akku zur Verfügung gestellten Gleichstrom ist eine Steuerung vorgesehen. Um die Abstrahlung elektromagnetischer Strahlung möglichst gering zu halten, ist vorgesehen, dass die Steuerung am zweiten Ende des Führungsrohrs, also räumlich direkt benachbart zum Motor angeordnet ist. Dadurch sind die Leitungen, die die Steuerung mit dem Motor verbinden und über die das mindestens 3-phasige Drehfeld bereitgestellt wird, sehr kurz, so dass die elektromagnetische Abstrahlung gering gehalten werden kann. Die durch das Führungsrohr geführten Leitungen vom Akku zur Steuerung führen gepulsten Gleichstrom zu. Die Anordnung der Steuerung im Motorgehäuse ist insbesondere dann möglich, wenn durch geeignete Luftführung und Abdichtung des Motorgehäuses dieses von Verschmutzungen weitgehend freigehalten werden kann.

Vorteilhaft sind der Motor und die Steuerung in einem Motorgehäuse angeordnet. Um eine gute Kühlung der Steuerung zu erreichen, ist vorgesehen, dass im Motorgehäuse mindestens eine Strömungsleitrippe angeordnet ist, die die Kühlluft aus dem Führungsrohr in Richtung auf die Steuerung lenkt. Vorteilhaft ist die Steuerung in üblicher Arbeitsposition des Arbeitsgeräts unterhalb einer Mündungsöffnung des Führungsrohrs angeordnet. Durch diese Anordnung ergibt sich eine vorteilhafte Umlenkung und Verwirbelung des Kühlluftstroms. Gleichzeitig kann das Motorgehäuse kompakt und im vorderen Bereich, in dem das Werkzeug angeordnet ist, niedrig ausgebildet werden. Zur Förderung der Kühlluft sind vorteilhaft im Motorgehäuse angeordnete, rotierend angetriebene Lüfterflügel vorgesehen, die Kühlluft durch das hohl ausgebildete Führungsrohr in das Motorgehäuse ansaugen. Durch die Ansaugung der Kühlluft über das Führungsrohr ist gewährleistet, dass im Wesentlichen saubere Luft aus dem Bereich des ersten Endes des Führungsrohrs in das Motorgehäuse angesaugt wird.

Ein einfacher Aufbau ergibt sich, wenn der Motor als Außenläufermotor ausgebildet ist, wobei mindestens ein Lüfterflügel zur Förderung der Kühlluft am Rotor des Motors angeordnet ist. Ein separates Lüfterrad zur Förderung der Kühlluft kann durch die Ausbildung des Motors als Außenläufermotor entfallen, so dass die Anzahl der benötigten Bauteile verringert ist. Es kann auch vorgesehen sein, ein separates Lüfterrad drehfest mit dem Rotor zu verbinden, beispielsweise formschlüssig auf dem Rotor aufzustecken. Um eine Verschmutzung der Steuerung im Betrieb weitgehend zu vermeiden, ist vorgesehen, dass das Motorgehäuse von einer Wand in eine Druckseite und eine Saugseite geteilt ist, wobei der Lüfterflügel auf der Druckseite und die Steuerung auf der Saugseite angeordnet sind. Die Saugseite ist dabei vorteilhaft deutlich größer als die Druckseite ausgebildet, so dass die Saugseite einen Konvektionsraum für die Kühlluft bildet, der zu einer effektiven Kühlung führt.

Ein einfacher Aufbau wird erreicht, wenn die Kühlluft durch einen an einer Aufnahmeöffnung für den Akku gebildeten Spalt zwischen Akku und Akkugehäuse in das Führungsrohr angesaugt wird. Zusätzliche Luftansaugöffnungen im Akkugehäuse können dadurch entfallen. Vorteilhaft ist an dem Akkugehäuse mindestens ein Handgriff zum Führen des Arbeitsgeräts angeordnet. Eine ergonomische Bedienung wird ermöglicht, wenn das Arbeitsgerät mindestens einen Bügelgriff besitzt, der insbesondere benachbart zum Akkugehäuse an dem Führungsrohr festgelegt ist. Der Bügelgriff ist dabei vorteilhaft spiegelsymmetrisch zu einer das Führungsrohr in Längsrichtung teilenden Spiegelebene ausgebildet, so dass das Arbeitsgerät von Rechtshändern und Linkshändern in gleicher Weise bedienbar ist. Eine besonders ergonomische Gestaltung des Bügelgriffs ergibt sich, wenn der Bügelgriff in Richtung vom ersten Ende zum zweiten Ende des Führungsrohrs in üblicher Arbeitshaltung des Arbeitsgeräts nach oben und gebogen verläuft. Der Mittelpunkt des Biegeradius des Bügelgriffs liegt dabei vorteilhaft oberhalb des Akkugehäuses und an der dem Akkugehäuse zugewandten Seite des Bügelgriffs.

Ausführungsbeispiele der Erfindung werden im Folgenden anhand der Zeichnung erläutert. Es zeigen:
- Fig. 1: eine perspektivische Ansicht eines Freischneiders,
- Fig. 2: einen Schnitt durch den Freischneider aus Fig. 1,
- Fig. 3: eine Seitenansicht in Richtung des Pfeils III in Fig. 2,
- Fig. 4: eine perspektivische, teilgeschnittene Ansicht des Motorgehäuses und Schneidkopfs des Freischneiders,
- Fig. 5: einen Schnitt durch das Motorgehäuse und den Schneidkopf des Freischneiders,
- Fig. 6: eine vergrößerte Ansicht des Luftaustrittsspalts aus dem Motorgehäuse,
- Fig. 7: eine schematische Seitenansicht eines Ausführungsbeispiels eines Freischneiders,
- Fig. 8: einen Schnitt durch das Drehgelenk des Freischneiders,
- Fig. 9: einen Schnitt entlang der Linie IX-IX in Fig. 7.

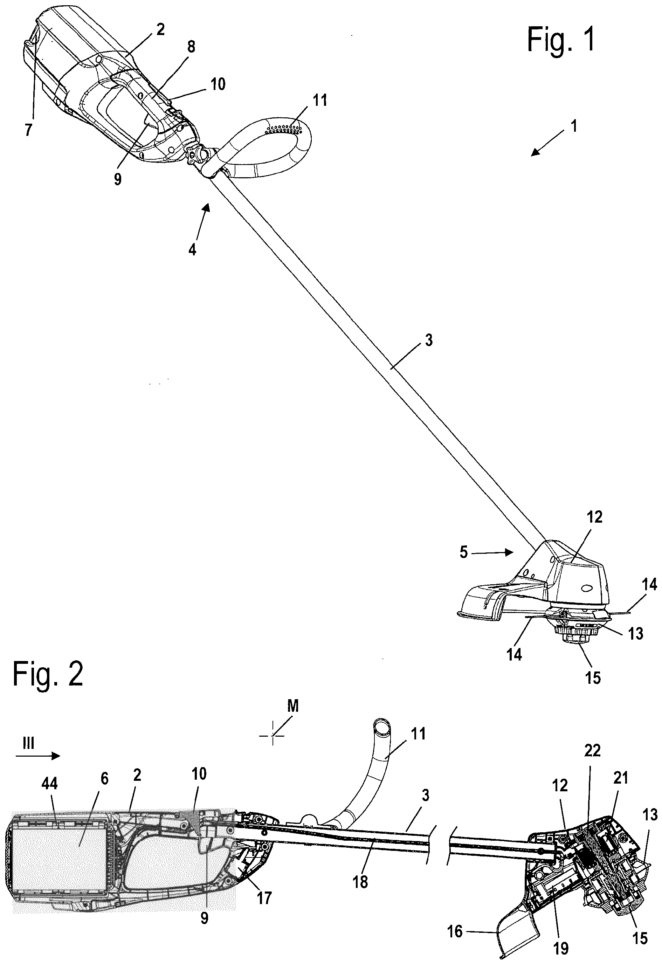

Fig. 1 zeigt als Ausführungsbeispiel für ein handgeführtes Arbeitsgerät einen Freischneider 1. Der Freischneider 1 besitzt ein Akkugehäuse 2, in dem ein in Fig. 2 gezeigter Akku 6 angeordnet ist. Der Akku 6 ist im Akkugehäuse 2 über eine in Fig. 1 gezeigte Akkuverriegelung 7 gehalten. Wie Fig. 1 zeigt, ist am Akkugehäuse 2 ein Handgriff 8 ausgebildet, an dem ein Gashebel 9 und eine Gashebelsperre 10 zur Bedienung des Arbeitsgeräts angeordnet sind. Das Akkugehäuse 2 ist über ein hohles Führungsrohr 3 mit einem Motorgehäuse 12 verbunden. Das Akkugehäuse 2 ist dabei an einem ersten Ende 4 des Führungsrohrs 3 angeordnet und das Motorgehäuse 12 an einem zweiten Ende 5 des Führungsrohrs 3. Am Motorgehäuse 12 ist ein Fadenmähkopf 13 angeordnet, der rotierend angetrieben ist. Der Fadenmähkopf 13 besitzt zwei Mähfäden 14, die als Schneidwerkzeug dienen. Zum Nachstellen von Mähfaden 14 ist an der Unterseite des Fadenmähkopfs 13 ein Betätigungsknopf 15 angeordnet. Benachbart zum Akkugehäuse 2 ist am Führungsrohr 3 ein Bügelgriff 11 festgelegt.

Wie die Schnittdarstellung in Fig. 2 zeigt, ist der Akku 6 in einer im Akkugehäuse 2 gebildeten Aufnahmeöffnung 44 angeordnet. Im Motorgehäuse 12 ist ein Motor 21 angeordnet, der den Fadenmähkopf 13 antreibt. Der Motor 21 besitzt eine Motorwelle 22. Der Motor 21 ist als elektronisch kommutierter, bürstenloser Motor ausgebildet. Der Motor 21 ist ein Außenläufermotor. Zum Betrieb des Motors 21 ist eine Steuerung 19 vorgesehen, die den vom Akku 6 gelieferten Gleichstrom in ein mindestens 3-phasiges Drehfeld umwandelt. Die Steuerung 19 ist benachbart zum Motor 21 im Motorgehäuse 12 angeordnet. Am Motorgehäuse 12 ist ein Schutz 16 befestigt. Wie Fig. 2 zeigt, wirkt der Gashebel 9 auf einen Schalter 17. Der Akku 6 ist mit der Steuerung 19 über eine Verbindungsleitung 18 verbunden, die durch das Führungsrohr 3 geführt ist und über die der Gleichstrom vom Akku 6 übertragen wird.

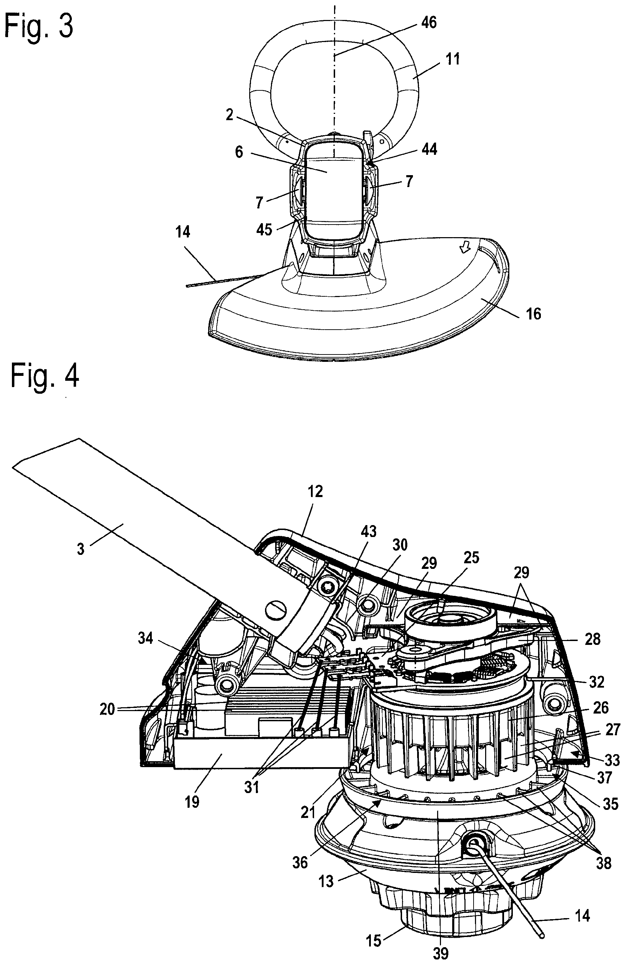

Fig. 3 zeigt die Anordnung des Akkus 6, der insbesondere als Akkupack ausgebildet ist, in der Aufnahmeöffnung 44. Wie Fig. 3 zeigt, ist zwischen dem Akku 6 und der Aufnahmeöffnung 44 ein umlaufender Spalt 45 ausgebildet, über den Kühlluft in das Akkugehäuse 2 und von dort über das Führungsrohr 3 in das Motorgehäuse 12 angesaugt wird. Wie Fig. 3 auch zeigt, ist der Bügelgriff 11 zu einer Spiegelebene 46, die das Führungsrohr 3 in Längsrichtung teilt, symmetrisch. Wie Fig. 2 zeigt, verläuft der Bügelgriff 11 vom Handgriff 8 nach oben und zum Motorgehäuse 12 hin und gebogen. Der Mittelpunkt M des Biegeradius des Bügelgriffs 11 liegt bei Blickrichtung senkrecht zur Spiegelebene 46 oberhalb des Führungsrohrs 3 bzw. des vorderen Bereichs des Akkugehäuses 2 an der dem Akkugehäuse 2 zugewandten Seite des Bügelgriffs 11.

Fig. 4 zeigt den Aufbau des Motorgehäuses 12 im Einzelnen. Das Führungsrohr 3 mündet mit einer Mündungsöffnung 43 ins Motorgehäuse 12. Benachbart zur Mündungsöffnung 43 sind Strömungsleitrippen 30 am Motorgehäuse 12 angeformt, die aus dem Führungsrohr 3 ins Motorgehäuse 12 austretende Kühlluft nach unten lenken. In üblicher Arbeitshaltung des Freischneiders 1, die in Fig. 4 gezeigt ist, ist die Steuerung 19 unterhalb der Mündungsöffnung 43 angeordnet. An der Steuerung 19 sind eine Vielzahl von Kühlrippen 20 ausgebildet, die vorteilhaft metallisch sind, um eine gute Wärmeabfuhr zu ermöglichen. Die Steuerung 19 ist am Boden des Motorgehäuses 12 neben dem Motor 21 angeordnet. Das Motorgehäuse 12 ist von einer Wand 32 in eine Druckseite 33 und eine Saugseite 34 aufgeteilt. Die Wand 32 ist als Rippe im Motorgehäuse 12 ausgebildet und am Motorgehäuse 12 angeformt. Das Volumen der Saugseite 34 ist deutlich größer als das der Druckseite 33. Auf der Saugseite 34 mündet das Führungsrohr 3. Auf der Saugseite 34 ist außerdem die Steuerung 19 sowie eine Platine 25 des Motors 21 angeordnet.

Die Platine 25 ist mit der Steuerung 19 über in Fig. 4 schematisch gezeigte Ansteuerleitungen 31 verbunden. Der Motor 21 besitzt einen Befestigungsflansch 28, der ebenfalls auf der Saugseite 34 angeordnet ist. Der Befestigungsflansch 28 ist zwischen parallel zueinander verlaufenden, benachbarten Gehäuserippen 29 des Motorgehäuses 12 eingeschoben und zwischen diesen gehalten. Der Befestigungsflansch 28 ist nicht am Motorgehäuse 12 angeschraubt. Das Motorgehäuse 12 besteht aus Kunststoff, insbesondere aus ABS. Dadurch sind die Gehäuserippen 29 geringfügig elastisch. Es ergibt sich eine elastische Lagerung des Motors 21. Der Befestigungsflansch 28 ist zwischen den Gehäuserippen 29 in axialer Richtung der Motorwelle 22 und in Umfangsrichtung abgestützt.

Der Motor 21 ist als Außenläufermotor ausgebildet. Der Motor 21 besitzt einen Rotor 26, der auf der Druckseite 33 angeordnet ist und der Lüfterflügel 27 trägt, die die Kühlluft aus dem Akkugehäuse 2 ansaugen.

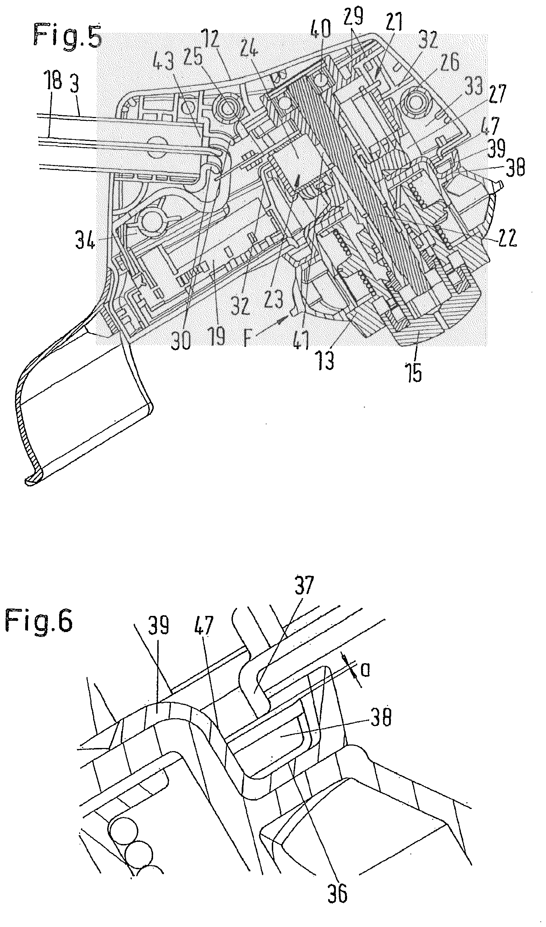

Das Motorgehäuse 12 besitzt einen Gehäuserand 37, der eine Durchtrittsöffnung für den Rotor 26 und die mit dem Rotor 26 drehfest verbundenen Bauteile begrenzt. Zwischen dem Rotor 26 und dem Fadenmähkopf 13 ist eine Scheibe 39 angeordnet, die ebenfalls drehfest mit dem Rotor 26 und dem Mähkopf 13 verbunden ist. Die Scheibe 39 besteht aus Kunststoff, insbesondere aus glasfaserverstärktem Polyamid. Die Scheibe 39 bildet einen Ringkanal 36, der auch in Fig. 6 vergrößert gezeigt ist. In dem Ringkanal 36 sind eine Vielzahl von Leitschaufeln 38 angeordnet, die in Umfangsrichtung zueinander beabstandet angeordnet sind und die jeweils radial ausgerichtet sind. Der Gehäuserand 37 erstreckt sich in axialer Richtung der Motorwelle 22 und ragt bis nahe an die Oberkante der Leitschaufeln 38. Zwischen den Leitschaufeln 38 und dem Gehäuserand 37 ist ein Abstand a gebildet, der in Fig. 6 gezeigt ist und der vorteilhaft so gering wie möglich gewählt wird. Der Abstand a ist so gewählt, dass bei den auftretenden Fertigungstoleranzen im üblichen Betrieb kein Kontakt zwischen dem Gehäuserand 37 und den Leitschaufeln 38 besteht. Der Abstand a beträgt vorteilhaft von etwa 0,5 mm bis etwa 2 mm. Aufgrund der Umlenkung der austretenden Kühlluft im Ringkanal 36 wird eine labyrinthartige Abdichtung des Luftaustrittsspalts 35 erreicht.

Wie Fig. 4 zeigt, umfasst die Druckseite 33 im Wesentlichen den Raum, der den Rotor 26 umgibt.

Fig. 5 zeigt den Aufbau des Motors 21 und dessen Lagerung im Einzelnen. Die Motorwelle 22 ist mit einem ersten Lager 40 im Bereich des Befestigungsflanschs 28 gelagert. Ein zweites Lager 41 ist in einem mittigen Bereich der Motorwelle 22 im Inneren des Stators 23 angeordnet. Dadurch ist die Motorwelle 22 nur in ihrem oberen Bereich gelagert. Der Stator 23 des Motors 21 umfasst mindestens eine Erregerspule 24, die ein Magnetfeld erzeugt. Der Rotor 26 besitzt radial außerhalb des Stators 23 Magnete, auf die das von mindestens einer Erregerspule 24 erzeugte Magnetfeld wirkt und so den Rotor 26 in Rotation versetzt. Die Motorwelle 22 rotiert im Betrieb mit dem Rotor 26 und ist drehfest mit dem Mähkopf 13 verbunden.

Aufgrund der elastischen Lagerung des Motors 21 zwischen den Gehäuserippen 29 kann der Motor beim Einwirken einer Querkraft F am Fadenmähkopf 13 verkippen. Um diese Kippbewegung zu begrenzen, ist an der Scheibe 39 ein Anschlag 47 vorgesehen, der mit dem Gehäuserand 37 (Figuren 4 und 6) zusammenwirkt und so die Kippbewegung des Motors 21 und des Mähkopfs 13 begrenzt. Der Winkel, um den die Motorwelle 22 verkippen kann, beträgt vorteilhaft von etwa 1° bis etwa 5°.

Um die labyrinthartige Abdichtung am Luftaustrittsspalt 35 noch zu verbessern, kann vorgesehen sein, dass auch der Abstand zwischen dem Gehäuserand 37 und dem Ringkanal 36 in radialer Richtung sehr gering gewählt wird, beispielsweise entsprechend dem Abstand a. Dadurch kann die mögliche Kippbewegung des Motors begrenzt werden. Es kann auch vorgesehen sein, dass der Ringkanal 36 radial nach außen oder radial nach innen öffnet und sich der Gehäuserand 37 radial nach innen bzw. radial nach außen erstreckt. In diesem Fall kann vorgesehen sein, dass der Gehäuserand 37 mit den Leitschaufeln 38 einen Anschlag für die Kippbewegung des Motors 21 bildet.

Die Anordnung der Steuerung eines elektronisch kommutierten, bürstenlosen Motors direkt benachbart zum Motor am zweiten Ende 5 des Führungsrohrs 3, die elastische Lagerung des Motors 21 zwischen Gehäuserippen 29 und die Gestaltung des Luftaustrittsspalts mit Leitschaufeln 38 stellen voneinander unabhängige, eigenständige erfinderische Gedanken dar, die sich jedoch vorteilhaft ergänzen.

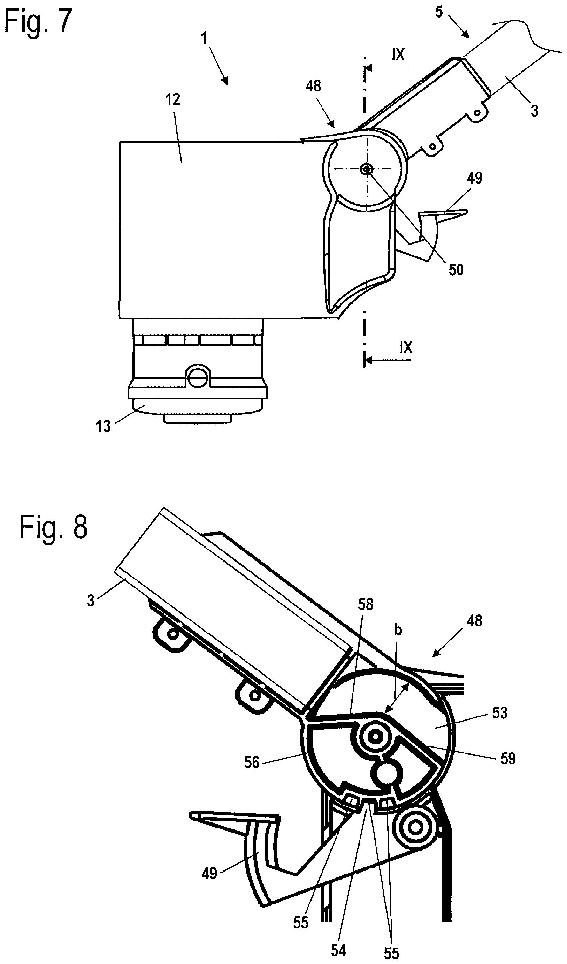

Fig. 7 zeigt ein Ausführungsbeispiel eines Freischneiders. Bei dem in Fig. 7 gezeigten Freischneider 1 ist das Motorgehäuse 12 über ein Drehgelenk 48 am zweiten Ende 5 des Führungsrohrs 3 gelagert. Das Drehgelenk 48 besitzt einen Betätigungshebel 49, mit dem eine Raststellung des Drehgelenks 48 gelöst oder die Position von Führungsrohr 3 und Motorgehäuse 12 zueinander fixiert werden kann. Das Motorgehäuse 12 ist dabei um eine Schwenkachse 50 am Führungsrohr 3 drehbar gelagert. Gleiche Bezugszeichen in den Figuren 7 bis 9 kennzeichnen entsprechende Elemente wie in den vorangegangenen Figuren.

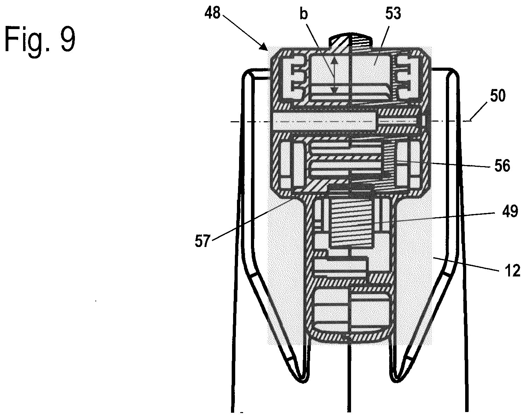

Die Figuren 8 und 9 zeigen die Gestaltung des Drehgelenks 48 im Einzelnen. Das Drehgelenk 48 besitzt einen walzenförmigen Abschnitt 56, der in einer Aufnahme 57 des Motorgehäuses 12 drehbar gelagert ist. Die Aufnahme 57 umgreift den walzenförmigen Abschnitt 56 um mehr als die Hälfte seines Umfangs. Wie Fig. 8 zeigt, ist im walzenförmigen Abschnitt 56 ein Kanal 53 ausgebildet, der von zwei winklig zueinander verlaufenden Seitenwänden 58 und 59 begrenzt ist. Die Wände 58 und 59 sind so zueinander angeordnet, dass sich in jeder möglichen Stellung des Führungsrohrs 3 die gleiche kleinste Höhe b des Kanals 53 ergibt. Das Drehgelenk 48 stellt damit eine Drosselstelle für die durch das Führungsrohr 3 ins Motorgehäuse 12 strömende Luft dar, die unabhängig von der Stellung des Drehgelenks 48 immer gleich groß ist.

Wie Fig. 8 zeigt, ist am Betätigungshebel 49 eine Raste 54 ausgebildet. Der walzenförmige Abschnitt 56 besitzt mehrere Rastvertiefungen 55, in denen die Raste 54 einrasten und so die Stellung des Führungsrohrs 3 relativ zum Motorgehäuse 12 festlegen kann. Durch den Kanal 53 und das Führungsrohr 3 ist vorteilhaft auch die Verbindungsleitung 18 geführt, die den Motor 21 mit Energie versorgt. Die Luftansaugung erfolgt über das Akkugehäuse 2, das Führungsrohr 3 und den Kanal 53 des Drehgelenks 48 in das Motorgehäuse 12.

## Patentansprüche

1. Handgeführtes Arbeitsgerät mit mindestens einem Werkzeug, das von einem Motor (21) angetrieben ist, wobei das Arbeitsgerät einen Akku (6) zum Antrieb des Werkzeugs und ein Führungsrohr (3) besitzt, wobei an einem ersten Ende (4) des Führungsrohrs (3) der Akku (6) und an einem zweiten Ende (5) des Führungsrohrs (3) der Motor (21) und das Werkzeug angeordnet sind, wobei der Motor (21) in einem Motorgehäuse (12) angeordnet ist,
**dadurch gekennzeichnet, dass** der Motor (21) derart elastisch gelagert ist, dass er bei am Werkzeug eingeleiteten Querkräften (F) im Motorgehäuse (12) kippen kann.

2. Arbeitsgerät nach Anspruch 1,
**dadurch gekennzeichnet, dass** der Motor (21) einen Befestigungsflansch (28) besitzt, der zwischen Gehäuserippen (29) des Motorgehäuses (12) eingeschoben und so im Motorgehäuse (12) gehalten ist.

3. Arbeitsgerät nach Anspruch 2,
**dadurch gekennzeichnet, dass** der Motor (21) eine Motorwelle (22) besitzt, und dass das Abtriebsteil sich bei Belastungen quer zur Längsrichtung der Motorwelle (22) an einem Gehäuserand (37) des Motorgehäuses (12) abstützt.

4. Arbeitsgerät nach Anspruch 3,
**dadurch gekennzeichnet, dass** der Gehäuserand (37) einen zwischen dem rotierenden Abtriebsteil und dem Motorgehäuse (12) gebildeten Luftaustrittsspalt (35) für die Kühlluft begrenzt.

5. Arbeitsgerät nach einem der Ansprüche 1 bis 4,
**dadurch gekennzeichnet, dass** am Motorgehäuse (12) ein rotierendes Abtriebsteil angeordnet ist, das das Werkzeug trägt und das von dem Motor (21) rotierend angetrieben ist, wobei Kühlluft über das Führungsrohr (3) in das Motorgehäuse (12) angesaugt wird, dass zwischen dem Abtriebsteil und dem Motorgehäuse (12) ein ringförmiger Luftaustrittsspalt (35) gebildet ist, durch den die Kühlluft austritt, und dass mindestens eine Leitschaufel (38)vorgesehen ist, die in den Ringspalt (35) ragt.

6. Arbeitsgerät nach Anspruch 5,
**dadurch gekennzeichnet, dass** die Leitschaufel (38) am Abtriebsteil angeordnet ist.

7. Arbeitsgerät nach Anspruch 5 oder 6,
**dadurch gekennzeichnet, dass** mehrere, insbesondere etwa radial ausgerichtete Leitschaufeln (38) vorgesehen sind.

8. Arbeitsgerät nach einem der Ansprüche 5 bis 7,
**dadurch gekennzeichnet, dass** der Luftaustrittsspalt (35) an einem im Querschnitt etwa U-förmigen Ringkanal (36) des Abtriebsteils ausgebildet ist, in den ein Gehäuserand (37) des Motorgehäuses (12) ragt.

9. Arbeitsgerät nach Anspruch 8,
**dadurch gekennzeichnet, dass** die Leitschaufel (38) in dem Ringkanal (36) angeordnet ist, und dass der Abstand (a) zwischen dem Gehäuserand (37) und der Leitschaufel (38) von etwa 0,5 mm bis etwa 2 mm beträgt.

10. Arbeitsgerät nach Anspruch 8 oder 9,
**dadurch gekennzeichnet, dass** das Arbeitsgerät einen Schneidkopf besitzt, der ein rotierendes Werkzeug trägt, wobei der Ringkanal (36) an einer drehfest mit dem Schneidkopf verbundenen Scheibe (39) ausgebildet ist.

11. Arbeitsgerät nach einem der Ansprüche 1 bis 10,
**dadurch gekennzeichnet, dass** der Motor (21) ein elektronisch kommutierter, bürstenloser Motor ist und eine Steuerung (19) besitzt, wobei der Motor (21) und die Steuerung (19) in dem Motorgehäuse (12) angeordnet sind.

12. Arbeitsgerät nach Anspruch 11,
**dadurch gekennzeichnet, dass** das Arbeitsgerät rotierend angetriebene Lüfterflügel (27) besitzt, die im Motorgehäuse (12) angeordnet sind und die Kühlluft durch das hohl ausgebildete Führungsrohr (3) in das Motorgehäuse (12) ansaugen, und dass der Motor (19) insbesondere als Außenläufermotor ausgebildet ist, wobei insbesondere mindestens ein Lüfterflügel (27) zur Förderung der Kühlluft am Rotor (26) des Motors (19) angeordnet ist.

13. Arbeitsgerät nach Anspruch 12,
**dadurch gekennzeichnet, dass** das Motorgehäuse (12) von einer Wand (32) in eine Druckseite (33) und eine Saugseite (34) geteilt ist, wobei der Lüfterflügel (27) auf der Druckseite (33) und die Steuerung (19) auf der Saugseite (34) angeordnet sind.

14. Arbeitsgerät nach einem der Ansprüche 11 bis 13,
**dadurch gekennzeichnet, dass** das Arbeitsgerät am ersten Ende (4) des Führungsrohrs (3) ein Akkugehäuse (2) mit einer Aufnahmeöffnung (44) für den Akku (6) besitzt, wobei die Kühlluft durch einen an der Aufnahmeöffnung (44) gebildeten Spalt (45) zwischen Akku (6) und Akkugehäuse (2) in das Führungsrohr (3) angesaugt wird.

## Claims

1. Hand-guided working implement comprising at least one tool driven by a motor (21), wherein the working implement has a battery (6) for driving the tool and a guide tube (3), wherein the battery (6) is located at one end (4) of the guide tube (3) and the motor (21) and the tool are located at a second end (5) of the guide tube (3), and wherein the motor (21) is located in a motor housing (12), **characterised in that** the motor (21) is resiliently mounted in such a way that it can tilt in the motor housing (12) if transverse forces (F) are introduced at the tool.

2. Working implement according to claim 1,
**characterised in that** the motor (21) has a mounting flange (28), which is inserted between housing ribs (29) of the motor housing (12) and thereby held in the motor housing (12).

3. Working implement according to claim 2,
**characterised in that** the motor (21) has a motor shaft (22), and **in that** the drive part is supported on a housing edge (37) of the motor housing (12) if loaded transversely to the longitudinal direction of the motor shaft (22).

4. Working implement according to claim 3,
**characterised in that** the housing edge (37) bounds an air outlet gap (35) for the cooling air formed between the rotating drive part and the motor housing (12).

5. Working implement according to any of claims 1 to 4,
**characterised in that** a rotating drive part which supports the tool and is driven to rotate by the motor (21) is located on the motor housing (12), wherein cooling air is drawn via the guide tube (3) into the motor housing (12), **in that** an annular air outlet gap (35), through which the cooling air is discharged, is formed between the drive part and the motor housing (12), and **in that** at least one guide vane (38) projecting into the annular gap (35) is provided.

6. Working implement according to claim 5,
**characterised in that** the guide vane (38) is located on the drive part.

7. Working implement according to claim 5 or 6,
**characterised in that** a plurality of guide vanes (38), which are oriented approximately radially in particular, is provided.

8. Working implement according to any of claims 5 to 7,
**characterised in that** the air outlet gap (35) is formed at an annular passage (36) of the drive part, which has an approximately U-shaped cross-section and into which a housing edge (37) of the motor housing (12) projects.

9. Working implement according to claim 8,
**characterised in that** the guide vane (38) is located in the annular passage (36), and **in that** the distance (a) between the housing edge (37) and the guide vane (38) is approximately 0.5 mm to approximately 2 mm.

10. Working implement according to claim 8 or 9,
**characterised in that** the working implement has a cutting head which supports a rotating tool, wherein the annular passage (36) is formed at a disc (39), which is non-rotatably connected to the cutting head.

11. Working implement according to any of claims 1 to 10,
**characterised in that** the motor (21) is an electronically commutated brushless motor and has a control unit (19), the motor (21) and the control unit (19) being located in the motor housing (12).

12. Working implement according to claim 11,
**characterised in that** the working implement has fan blades (27), which are driven to rotate, are located in the motor housing (12) and draw the cooling air into the motor housing (12) through the hollow guide tube (3), and **in that** the motor (19) is in particular designed as an external rotor motor, wherein in particular at least one fan blade (27) for delivering the cooling air is located on the rotor (26) of the motor (19).

13. Working implement according to claim 12,
**characterised in that** the motor housing (12) is divided by a wall (32) into a discharge side (33) and a suction side (34), the fan blade (27) being located on the discharge side (33) and the control unit (19) being located on the suction side (34).

14. Working implement according to any of claims 11 to 13,
**characterised in that** the working implement has a battery housing (2) with a reception opening (44) for the battery (6) at the first end (4) of the guide tube (3), wherein the cooling air is drawn into the guide tube (3) through a gap (45) formed at the reception opening (44) between the battery (6) and the battery housing (2).

## Revendications

1. Instrument de travail tenu à la main, avec au moins un outil qui est entraîné par un moteur (21), l'instrument de travail comportant un accumulateur (6) pour l'entraînement de l'outil, et un tube de guidage (3), l'accumulateur (6) étant disposé à une première extrémité (4) du tube de guidage (3), et le moteur (21) et l'outil à une seconde extrémité (5) du tube de guidage (3), le moteur (21) étant disposé dans un carter de moteur (12),
**caractérisé en ce que** le moteur (21) est monté élastiquement de manière à pouvoir basculer dans le carter de moteur (12), en présence de forces transversales (F) introduites au niveau de l'outil.

2. Instrument de travail selon la revendication 1,
**caractérisé en ce que** le moteur (21) comporte une bride de fixation (28) qui est glissée entre des ailettes (29) du carter de moteur (12) et qui est ainsi fixée dans le carter de moteur (12).

3. Instrument de travail selon la revendication 2,
**caractérisé en ce que** le moteur (21) comporte un arbre de moteur (22) et **en ce que** l'élément de sortie, en présence de contraintes transversalement par rapport au sens longitudinal de l'arbre de moteur (22), s'appuie contre un bord (37) du carter de moteur (12).

4. Instrument de travail selon la revendication 3,
**caractérisé en ce que** le bord de carter (37) délimite un passage de sortie d'air (35), pour l'air de refroidissement, qui est formé entre l'élément de sortie rotatif et le carter de moteur (12).

5. Instrument de travail selon l'une des revendications 1 à 4,
**caractérisé en ce qu'**il est prévu, disposé sur le carter de moteur (12), un élément de sortie rotatif qui porte l'outil et qui est entraîné en rotation par le moteur (21), l'air de refroidissement étant aspiré dans le carter de moteur (12) par l'intermédiaire du tube de guidage (3), **en ce qu'**il est prévu, formé entre l'élément de sortie et le carter de moteur (12), un passage de sortie d'air annulaire (35) par lequel l'air de refroidissement sort, et **en ce qu'**il est prévu au moins une palette directrice (38) qui dépasse dans le passage annulaire (35).

6. Instrument de travail selon la revendication 5,
**caractérisé en ce que** la palette directrice (38) est disposée sur l'élément de sortie.

7. Instrument de travail selon la revendication 5 ou 6,
**caractérisé en ce qu'**il est prévu plusieurs palettes directrices (38), en particulier orientées à peu près radialement.

8. Instrument de travail selon l'une des revendications 5 à 7,
**caractérisé en ce que** le passage de sortie d'air (35) est formé sur un conduit annulaire (36) à section transversale à peu près en U de l'élément de sortie, dans lequel un bord (37) du carter de moteur (12) dépasse.

9. Instrument de travail selon la revendication 8,
**caractérisé en ce que** la palette directrice (38) est disposée dans le conduit annulaire (36) et **en ce que** la distance (a) entre le bord de carter (37) et la palette directrice (38) est d'environ 0,5 mm à environ 2 mm.

10. Instrument de travail selon la revendication 8 ou 9,
**caractérisé en ce qu'**il comporte une tête de coupe qui porte un outil rotatif, le conduit annulaire (36) étant formé sur une plaque (39) reliée, fixe en rotation, à la tête de coupe.

11. Instrument de travail selon l'une des revendications 1 à 10,
**caractérisé en ce que** le moteur (21) est un moteur à commutation électronique, sans balais, et comporte une commande (19), le moteur (21) et la commande (19) étant disposés dans le carter de moteur (12).

12. Instrument de travail selon la revendication 11,
**caractérisé en ce qu'**il comporte des ailettes de ventilateur (27), entraînées en rotation, qui sont disposées dans le carter de moteur (12) et qui aspirent l'air de refroidissement dans le carter de moteur (12) à travers le tube de guidage (3) de forme creuse, et **en ce que** le moteur (19) est conçu en particulier comme un moteur à induit extérieur, au moins une ailette de ventilateur (27), en particulier, étant prévue pour l'acheminement de l'air de refroidissement au niveau du rotor (26) du moteur (19).

13. Instrument de travail selon la revendication 12,
**caractérisé en ce que** le carter de moteur (12) est divisé par une paroi (32) en un côté refoulement (33) et un côté aspiration (34), l'ailette de ventilateur (27) étant disposée sur le côté refoulement (33), et la commande (19) sur le côté aspiration (34).

14. Instrument de travail selon l'une des revendications 11 à 13,
**caractérisé en ce qu'**il comporte à la première extrémité (4) du tube de guidage (3) un carter d'accumulateur (2) avec une ouverture de réception (44) pour l'accumulateur (6), l'air de refroidissement étant aspiré dans le tube de guidage (3) par un interstice (45) formé au niveau de l'ouverture de réception (44), entre l'accumulateur (6) et le carter d'accumulateur (2).
